# EUROPÄISCHE PATENTSCHRIFT

(11) **EP 3 145 617 B1**
(45) Veröffentlichungstag und Bekanntmachung des Hinweises auf die Patenterteilung: **18.09.2019**
(21) Anmeldenummer: 15723538.3
(22) Anmeldetag: 21.05.2015
(51) Int. Cl.: B01D 35/147, B01D 29/07

(54) **FILTERELEMENT UND FILTERANORDNUNG**
FILTER ELEMENT AND FILTER ARRANGEMENT
ÉLÉMENT FILTRANT ET ENSEMBLE DE FILTRATION

(30) Priorität: 21.05.2014 DE 102014007374
(43) Veröffentlichungstag der Anmeldung: 29.03.2017
(73) Patentinhaber: Mann+Hummel GmbH, 71636 Ludwigsburg (DE)
(72) Erfinder: KLEIN, Martin, 95447 Bayreuth (DE); BARTEL, Frank, 71642 Ludwigsburg (DE); EISENGRÄBER-PABST, Jobst, 71720 Oberstenfeld-Gronau (DE); KREINER, Anton, 94419 Reisbach (DE); GOHL, Pamela, 71686 Remseck (DE); SPELTER, Lars, 71254 Ditzingen (DE); LABARTA, Armando, 71638 Ludwigsburg (DE); FASOLD, Michael, 71549 Auenwald (DE); DEHNEN, Ulrich, 70806 Kornwestheim (DE); STURGESS, Christopher, Marc, 70825 Korntal (DE)
(74) Vertreter: Seyboth, Matthias
(86) Internationale Anmeldenummer: PCT/EP2015/061265
(87) Internationale Veröffentlichungsnummer: WO 2015/177284

(56) Entgegenhaltungen:
- JP-A- H1 182 210
- JP-A- H04 326 906
- JP-A- 2001 020 821

## Beschreibung

### Technisches Gebiet

Die vorliegende Erfindung betrifft ein Filterelement sowie eine Filteranordnung zum Filtern von Fluiden, wie beispielsweise flüssige Betriebsmittel für Kraftfahrzeuge. In einer Filteraufnahme oder einem Filtergehäuse wird ein Filterelement aufgenommen, so dass insgesamt ein Filtersystem oder eine Filteranordnung entsteht.

### Stand der Technik

Im Kraftfahrzeugbereich werden häufig flüssige Betriebsmittel verwendet, wie beispielsweise Kraftstoffe, wie Benzin, Diesel, Schmierstoffe, wie Öl oder auch Harnstofflösungen, welche von Verunreinigungen befreit werden müssen. Dazu dienen meist Filterelemente, die in ein Filtergehäuse oder eine Filteraufnahme eingesetzt werden. Die Filterelemente selbst umfassen dabei ein meist flächiges und gefaltetes Filtermedium, welches zwischen Endscheiben oder Endkappen vorgesehen ist und radial durchströmt wird. Bekannt sind insbesondere zylinderförmige Gehäuse und Filterelementgeometrien. Meist sind aufgrund der Einbausituationen geometrische Vorgaben an das jeweilige Filterelement, die Filteraufnahme und an Zu- und Ableitungen für Rein- und Rohfluid gegeben. Wünschenswert ist es, auf kleinem Bauraum eine möglichst große Filterfläche einzusetzen.

Aus der DE 198 56 723 A1 ist ein Filtereinsatz für ein einen Einlass und einen Auslass aufweisendes Kraftstofffilter bekannt, wobei der Filtereinsatz ein im Querschnitt C-förmiges sterngefaltetes Filtermaterialbalg aufweist, welches durch zwei ebene stirnseitige Deckel in Form von Kreisausschnitten und durch einen rechteckigen Seitendeckel allseitig abgedichtet ist. Der Filtereinsatz kann raumsparend in einem Gehäuse mit D-förmigem Querschnitt angeordnet werden.

Aus der Offenlegungsschrift DE 20 2009 000 969 U1 ist ein Filterelement mit einem ringförmig geschlossenen gefalteten Filtermedium bekannt, dessen Stirnseiten dicht mit Endscheiben verbunden sind. Die Faltenhöhe zwischen benachbarten Falten nimmt über mehrere Falten hinweg zu bzw. ab. Hierdurch ist das Filterelement in Bauräume mit speziellen Geometrien integrierbar.

In der WO 2007/081425 A1 sind Filterelemente mit gefaltetem Filtermedium beschrieben, wobei sich die Falten entlang einer Längsachse und einer quer hierzu verlaufenden Querachse zwischen ersten und zweiten Faltenspitzen erstrecken. Die Faltentiefe variiert entlang einer normal zu den Faltenebenen verlaufenden Achse.

Aus der JP H04 326906 A ist ein Filterelement bekannt, das über einen zentralen Stützkörper verfügt, mit dem an zwei voneinander abgewandten Oberflächen ein Filtermedium verbunden ist. Das Filtermedium weist dabei eine variable Faltenhöhe auf, sodass sich als Umhüllende im Querschnitt ein Kreis ergibt. Das Filtermedium liegt in Form von zwei Faltenbälgen vor, deren Enden sich jeweils an den Kurzseiten des Stützkörpers überlappen.

JP 2001 020821 A betrifft ein Filterelement, das einen Filterbalg aufweist, der eine im Wesentlichen C-förmige Querschnittsform hat. Stirnseitig ist der Filterbalg von Endscheiben verschlossen. Umlaufend um den C-förmigen Filterbalg ist eine Hülle vorgesehen, die drei Flächen hat: Stirnseitig oben, stirnseitig unten und Innenfläche. Auf der Außenseite des Filterelements ist keine Hülle vorgesehen, dort liegen die Falten frei.

Schließlich wird in der JP H11 82210 A ein Filterelement offenbart, das beispielsweise in einem In-Tank Filter eingesetzt werden kann. Es hat ebenfalls eine im Wesentlichen C-förmige Querschnittsform und weist einen zusammenhängend gefalteten Filterbalg auf, dessen Enden aufeinandergelegt sind und durch eine Klammer zusammengehalten werden. Innerhalb des Filterbalgs befindet sich ein sichelförmiger Stützkörper.

### Offenbarung der Erfindung

Es ist daher eine Aufgabe der vorliegenden Erfindung, alternative oder verbesserte Filterelemente und/oder Filteranordnungen bereitzustellen.

Demgemäß wird ein Filterelement zum Filtern von Flüssigkeiten, insbesondere von Betriebsmitteln für ein Kraftfahrzeug, mit einem gefalteten Filtermedium, welches äußere Faltkanten und innere Faltkanten umfasst, vorgeschlagen. Die Faltkanten verlaufen dabei insbesondere entlang einer Längsachse des Filterelements, und ein Stützkörper, welcher einen ersten Stützkörperabschnitt und einen zweiten Stützkörperabschnitt umfasst, ist vorgesehen. Der erste Stützkörperabschnitt ist den inneren Faltkanten zugewandt und schmiegt sich an eine Einhüllende der inneren Faltkanten.

Dem Stützkörper kommt die Funktion zu, die Falten des Filtermediums gegen den Druck der zu filternden Flüssigkeit abzustützen und vor einem Kollabieren zu schützen. Vorzugsweise liegen die inneren Faltkanten an dem ersten Stützkörperabschnitt an. Hierzu sind die Einhüllende der inneren Faltkanten und die Kontur des ersten Stützkörperabschnitts aneinander angepasst, sodass sich eine Einhüllende der inneren Faltkanten und der erste Stützabschnitt aneinander schmiegen.

Durch die Anordnung des Stützkörpers und des gefalteten oder plissierten Filtermediums in der vorgeschlagenen Weise kann bei einer vorgegebenen Grundfläche des Filterelementes eine besonders effiziente und damit vergrößerte Filterfläche erzielt werden. Das Filterelement kann dabei einen einzelnen Faltenbalg aus gefaltetem Filtermedium umfassen. Dadurch, dass eine äußere Mantelfläche, also eine Fläche, die nach außen hin das beispielsweise zylinderförmige Filterelement begrenzt, sowohl von äußeren Faltkanten als auch von einem Stützkörperabschnitt direkt begrenzt wird, ist eine günstige Verteilung des Filtermediums auf dem vorliegenden Volumen möglich. Das Filtermedium ist hierbei derart gefaltet, dass die sich zwischen einer inneren Faltkante und einer äußeren Faltkante erstreckenden Faltabschnitte parallel oder zumindest im Wesentlichen parallel zueinander verlaufen. Hierbei liegen die Faltabschnitte in zueinander parallelen Ebenen, deren Flächennormalen senkrecht zu der Längsachse des Filterelements ausgerichtet sind.

Der Stützkörper kann vorteilhaft einstückig aus einem Kunststoff gefertigt sein, beispielsweise in einem Spritzgussverfahren.

Erfindungsgemäß bilden die Einhüllende der äußeren Faltkanten und der zweite Stützkörperabschnitt die äußere Mantelfläche des Filterelements. Die Grundflächen des Filterelements können dabei beispielsweise von den Faltprofilen gebildet sein.

In weiteren Ausführungsformen des Filterelementes ist das gefaltete Filtermedium in der Art eines Endlosfaltenbalgs ausgeführt und umfasst einen Umlauffaltabschnitt. Der Umlauffaltabschnitt umläuft insbesondere zusammen mit den inneren Faltkanten den Stützkörper. Der Stützkörper kann somit in das Filterelement eingeführt sein. Dabei bildet zum Beispiel die Einhüllende der äußeren Faltkanten zusammen mit dem Umlaufabschnitt, der sich an den zweiten Stützkörperabschnitt anschmiegt, die äußere Mantelfläche des Filterelementes. Bei der äußeren Mantelfläche handelt es sich um einen Zylindermantel, beispielsweise eines Kreiszylinders, sodass man von einem Rundfilterelement sprechen kann. Im Gegensatz zu den im Stand der Technik üblichen Rundfilterelementen ist das gefaltete Filtermedium jedoch nicht als sternförmiger Filterbalg ausgeführt, sondern als Filtermediumkörper mit paralleler Faltenstellung.

Gemäß der Erfindung bilden die inneren Faltkanten und der erste Stützkörperabschnitt wenigstens teilweise einen Reinfluidbereich oder Reinflüssigkeitsbereich aus. Der Reinflüssigkeitsbereich kann dabei wenigstens teilweise innerhalb einer von den inneren Faltkanten gebildeten Einhüllenden liegen. Durch den Reinflüssigkeitsbereich kann gefiltertes Fluid, wie beispielsweise ein Betriebsmittel für ein Kraftfahrzeug, insbesondere axial ausströmen. Der Reinflüssigkeitsbereich ist zum Beispiel innerhalb des Stützkörpers zwischen dem ersten Stützkörperabschnitt und dem zweiten Stützkörperabschnitt vorgesehen.

In Ausführungsformen erfolgt eine Durchströmung der zu filternden Flüssigkeit von den äußeren Faltkanten zu dem zweiten Stützkörperabschnitt hin. Man kann sagen, dass bei dem Filterelement eine Durchströmung nicht radial erfolgt, sondern wenigstens teilweise quer zu dem Filterelementquerschnitt, nämlich von den äußeren Faltkanten hin zu den inneren Faltkanten und weiter in den Reinfluidbereich hinein.

Die äußere Mantelfläche kann dabei einen Zylindermantel, wie beispielsweise einen Kreiszylindermantel, bilden. Es sind jedoch auch ovale oder eckige Zylindermantelflächen denkbar.

Erfindungsgemäß liegt der Reinflüssigkeitsbereich exzentrisch zu einem Schwerpunkt der Querschnittsfläche des Zylindermantels. In Ausführungsformen, bei denen das Filterelement ein Rundfilterelement in der Art eines Kreiszylindermantels beschreibt, liegt der Reinflüssigkeitsbereich insbesondere außerhalb eines Bereichs der Symmetrieachse, also der Längsachse.

Bei dem Filterelement können zwischen den äußeren und den inneren Faltkanten Faltenabschnitte mit variabler Faltenhöhe gebildet sein. Eine variable Faltenhöhe ermöglicht eine besonders günstige Raumausnutzung innerhalb des Volumens des Filterelements, also innerhalb der Mantelfläche.

Bei Ausführungsformen ist der erste Stützkörperabschnitt durch sich von dem zweiten Stützkörperabschnitt erstreckende Stützelemente gebildet. Die Stützelemente können dabei rippenförmig ausgestaltet sein oder auch abstehende Teile sein.

In Ausführungsformen ist der zweite Stützkörperabschnitt flüssigkeitsdicht. Bei einer flüssigkeitsdichten Ausgestaltung kann der zweite Stützkörperabschnitt eine äußere Mantelfläche des Filterelementes bilden. Es ist auch denkbar, dass der zweite Stützkörperabschnitt Flüssigkeitsdurchlässe umfasst.

In Ausführungsformen sind Endfalten des gefalteten Filtermediums in einem Bereich zwischen dem ersten und dem zweiten Stützkörperabschnitt an dem Stützkörper befestigt.

Erfindungsgemäß umfasst das Filterelement ausschließlich einen von dem gefalteten Filtermedium gebildeten zusammenhängenden Faltenbalg. Gegenüber anderen Filterelementen hat die Ausführung mit nur einem Faltenbalg den Vorteil, dass die Filterfläche erhöht ist. Es erfolgt beispielsweise eine besonders günstige Raumausnutzung innerhalb der Mantelfläche des Filterelementes.

In Ausführungsformen ist ferner mindestens eine an einem der Faltprofile befestigte Endscheibe vorgesehen, welche insbesondere einen Anschlussstutzen aufweist, welcher kommunikativ mit dem Reinfluidbereich gekoppelt ist. Die Endscheibe kann auf die Faltprofile aufgebracht sein und stabilisiert die Faltgeometrie. In Ausführungsformen ist eine obere und eine untere Endscheibe vorgesehen, zwischen denen das gefaltete Filtermedium sowie der Stützkörper vorgesehen sind.

Vorteilhaft ist in die obere Endscheibe oder eine obere Stirnseite des Stützkörpers ein Umgehungsventil für das Filtermedium integriert. Derartige Umgehungsventile werden insbesondere bei Ölfiltern eingesetzt. Durch die Anordnung des Umgehungsventils im oberen Bereich des Filterelements wird vermieden, dass Partikel, welche sich während des Betriebes am Boden des Filterelements und/oder Filtergehäuses absetzen, bei geöffnetem Umgehungsventil durch dieses in den Reinfluidbereich gelangen. Das Umgehungsventil ist vorzugsweise benachbart zu dem Anschlussstutzen angeordnet, über welchen das Reinfluid aus dem Filterelement ableitbar ist. Die Anordnung von Umgehungsventil und Anschlussstutzen unmittelbar nebeneinander ist vorteilhaft für den Differenzdruck des Filterelements bzw. Filtersystems. Das Umgehungsventil kann beispielsweise als Stellventil oder Kugelventil ausgeführt sein; andere Ausführungen sind jedoch gleichermaßen möglich. Die obere Endscheibe oder die obere Seitenfläche des Stützkörpers kann hierbei den Ventilsitz bilden, sodass ein zusätzliches den Ventilsitz bildendes Bauteil nicht erforderlich ist.

In einer vorteilhaften Ausgestaltung des Filterelements weist der Stützkörper eine Heizvorrichtung auf Hierdurch kann das Filterelement besonders platzsparend mit einer Heizvorrichtung versehen werden. Insbesondere bei der Ausgestaltung des Filterelements als Kraftstofffilter ist eine Heizvorrichtung vorteilhaft, da hiermit das Filterelement bedarfsweise erwärmt werden kann und somit auch bei tiefen Temperaturen, bei denen insbesondere Bestandteile von Dieselkraftstoff zur Verfestigung neigen, die Durchströmung des Filterelements sichergestellt ist. Mit der Heizfunktion übernimmt der Stützkörper eine weitere Funktion neben dem Abstützen des Filtermediums und der Führung des Reinfluids.

Die Heizvorrichtung ist vorteilhaft als Folienverbund ausgebildet, d. h. die Heizvorrichtung weist eine Heizfolie, beispielsweise mit einem elektrischen Widerstandsheizelement, auf, welches zwischen zwei Trägerfolien einlaminiert ist. Der Folienverbund ist in seiner Form an den Stützkörper anpassbar und auf diesen aufbringbar. Hierdurch kann eine verhältnismäßig große Fläche beheizt werden, ohne dabei zu einem signifikanten Differenzdruckanstieg zu führen.

Die Heizvorrichtung kann beispielsweise auf den zweiten Stützkörperabschnitt aufgebracht werden. Alternativ ist eine an den kompletten Stützkörper angepasste Formgebung der Heizvorrichtung möglich, sodass die Heizvorrichtung den Stützkörper wie ein Mantel umgibt, wobei zweckmäßig Öffnungen zum Durchtritt des Fluids durch die Heizvorrichtung in einen zwischen erstem und zweitem Stützkörperabschnitt ausgebildeten Reinfluidbereich eingebracht sind. Eine weitere alternative Ausführungsform besteht darin, den Stützkörper und die Heizvorrichtung gemeinsam auszubilden, sodass die Heizvorrichtung untrennbar mit dem Stützkörper verbunden ist. Beispielsweise ist der Stützkörper als Kunststoffspritzgussteil hergestellt und das Heizelement in den Kunststoff eingespritzt. Eine besonders vorteilhafte Ausgestaltung einer Heizvorrichtung ist beispielsweise in der bislang noch nicht offengelegten deutschen Patentanmeldung mit dem Aktenzeichen DE 10 2015 003 098.1 beschrieben, auf die hiermit Bezug genommen wird. Demgemäß ist ein Sandwichaufbau mit einem elektrischen Widerstandselement, das zwischen zwei Trägerfolien einlaminiert und von flächigen Wärmeleitelementen eingefasst ist, in ein Kunststoffmaterial eingebettet. Die elektrischen Anschlusskontakte sind aus dem Kunststoff herausgeführt. Vorteilhaft ist ein derartiger Sandwichaufbau in den Kunststoff des Stützkörpers eingebettet.

In einer Weiterbildung des erfindungsgemäßen Filterelements weist der Stützkörper mindestens einen Sensor oder mindestens eine Schnittstelle für einen Sensor auf. Der Sensor ist vorzugsweise reinseitig angeordnet. Die Schnittstelle ist beispielsweise in Form eines Anschlussstutzens in den zweiten Stützkörperabschnitt eingebracht, sodass der Sensor von außen in das Filterelement einsteckbar ist und in den Reinfluidbereich zwischen erstem und zweitem Stützkörperabschnitt einragt. Ebenfalls möglich ist eine Ausgestaltung des Sensors als Chip, welcher auf einer dem Reinfluidbereich zugewandten Innenfläche des Stützkörpers anordenbar ist. Der Chip kann vorteilhaft kontaktlos mit einer Steuer-/Auswerteeinheit im Filtergehäuse kommunizieren. Der Sensor kann beispielsweise dazu ausgestaltet sein, die Temperatur, den Druck, eine Druckdifferenz oder einen Wasserstand zu bestimmen oder bestimmte Partikel und/oder deren Eigenschaften zu detektieren. Die Integration des Sensors in den Stützkörper ermöglicht eine platzsparende Anordnung des Sensors.

Es wird ferner eine Filteranordnung vorgeschlagen, welche eine Filteraufnahme umfasst und ein in der Filteraufnahme aufgenommenes Filterelement. Das Filterelement ist insbesondere wie vorbeschrieben ausgestaltet. Dabei kann beispielsweise ein Anschlussstutzen außerhalb des Schwerpunktes einer Querschnittsfläche des Filterelements vorgesehen sein. Aufgrund der Anordnung von gefaltetem Filtermedium und dem Stützkörperabschnitt nebeneinander kann ein vorgegebener Bauraum günstig ausgenutzt werden.

Weitere mögliche Implementierungen der Erfindung umfassen auch nicht explizit genannte Kombinationen von zuvor oder im Folgenden bezüglich der Ausführungsbeispiele beschriebenen Merkmale oder Ausführungsformen. Dabei wird der Fachmann auch Einzelaspekte als Verbesserungen oder Ergänzungen zu der jeweiligen Grundform des Filterelements und/oder der Filteranordnung hinzufügen.

Weitere Ausgestaltungen der Erfindung sind Gegenstand der Unteransprüche sowie der im Folgenden beschriebenen Ausführungsbeispiele der Erfindung. Im Weiteren wird die Erfindung anhand von Ausführungsbeispielen unter Bezugnahme auf die beigelegten Figuren näher erläutert.

### Kurze Beschreibung der Zeichnungen

Es zeigen dabei:
Fig. 1: eine perspektivische Explosionsdarstellung einer ersten Ausführungsform eines Filterelements;
Fig. 2: eine Querschnittsansicht des Filterelements gemäß Fig. 1;
Fig. 3: eine Querschnittsansicht einer Ausführungsform einer Filteranordnung mit einem Filterelement gemäß Fig. 1;
Fig. 4: eine perspektivische Ansicht einer Ausführungsform einer Endscheibe für ein Filterelement;
Fig. 5 und 6: perspektivische Explosionsdarstellungen einer zweiten und dritten Ausführungsform eines Filterelements;
Fig. 7 - 10: Querschnittsansichten weiterer Ausführungsformen eines Filterelements;
Fig. 11 - 13: eine perspektivische, eine Explosions- und eine Querschnittsansicht einer achten Ausführungsform eines Filterelements;
Fig. 14: eine perspektivische Darstellung eines Stützkörpers eines Filterelements mit integrierter Heizvorrichtung;
Fig. 15: eine perspektivische Darstellung eines Filterelements mit einem Sensor;
Fig. 16: eine Schnittdarstellung des Filterelements mit einem Sensor aus Fig. 15;
Fig. 17: eine perspektivische Darstellung eines Filterelements mit Filterumgehungsventil; und
Fig. 18: eine Schnittdarstellung eines Ausschnitts aus Fig. 17.

In den Figuren bezeichnen dieselben Bezugszeichen gleiche oder funktionsgleiche Elemente, soweit nichts Gegenteiliges angegeben ist.

### Ausführungsform(en) der Erfindung

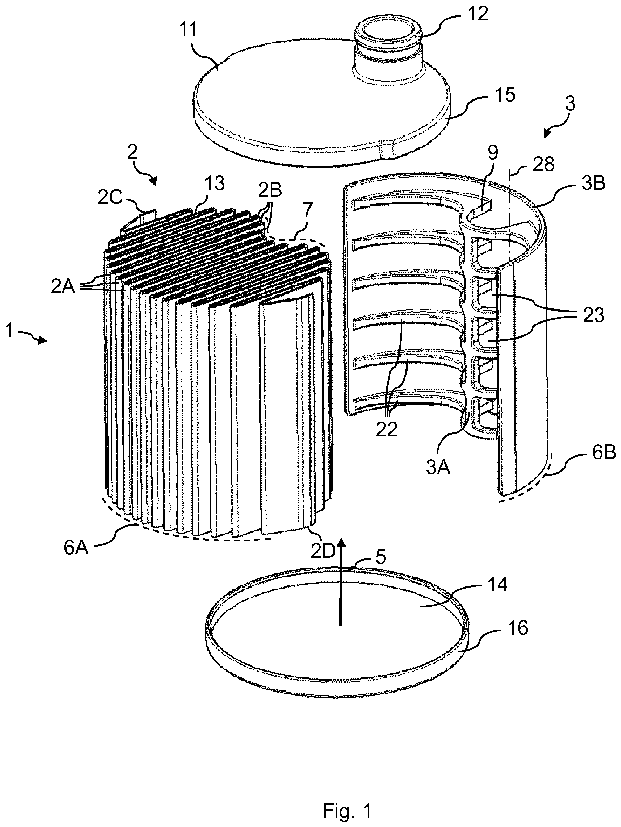

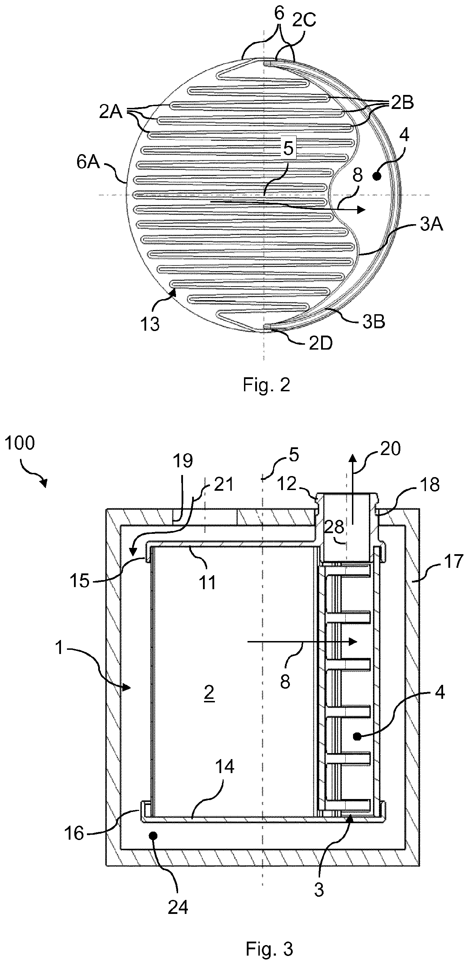

Die Fig. 1 zeigt eine perspektivische Explosionsdarstellung einer ersten Ausführungsform eines Filterelements. In der Fig. 2 ist eine zugehörige Querschnittsansicht dargestellt. Die erste Ausführungsform eines Filterelementes 1 umfasst dabei ein gefaltetes Filtermedium 2, welches aus einem flachen Material zickzackförmig gefaltet ist. Das Material kann zum Beispiel ein synthetisches Vliesmaterial, Papier, Gelege oder Gewebe umfassen. Flache Filtermedien, die sich zum Ausbilden von plissierten Medien eignen sind bekannt. Es können ein- oder mehrlagige Medien eingesetzt werden.

Man erkennt in der Orientierung der Fig. 1 von oben die Faltprofile 13. In der Fig. 2 sieht man, dass die Faltungen unterschiedliche Faltenhöhen haben. Das heißt, der Abstand zwischen benachbarten Faltkanten 2A, 2B, welcher einen Faltabschnitt bildet, ändert sich im Verlauf der Faltungen. Das Filtermedium 2 bildet eine Art Faltenbalg aus, wobei die Faltabschnitte im Wesentlichen eng beieinander verlaufen, aber dennoch Flüssigkeit zwischen den Faltabschnitten strömen kann. Die Faltabschnitte verlaufen im Wesentlichen parallel zueinander, d. h. die Faltabschnitte verlaufen in parallelen Ebenen. In der Darstellung erkennt man äußere Faltkanten 2A und innere Faltkanten 2B, wobei lediglich beispielhaft einige mit Bezugszeichen benannt sind. Äußere Faltkanten 2A weisen nach außen, und innere Faltkanten 2B in einen Innenraum des Filterelements 1.

Es ist ferner in der Fig. 1 eine Einhüllende 6A der äußeren Faltkanten 2A angedeutet sowie eine Einhüllende 7 der inneren Faltkanten 2B. Den inneren Faltkanten 2B gegenüber ist ein erster Stützkörperabschnitt 3A eines Stützkörpers 3 angeordnet. Der Stützkörper 3 umfasst im Wesentlichen einen äußeren oder zweiten Stützkörperabschnitt 3B und einen inneren Stützkörperabschnitt 3A, welcher von von dem äußeren Stützkörperabschnitt 3B verlaufenden Rippen 22 oder Stützelementen 9 gebildet ist. Die Stützelemente 9 umschließen im zusammengesetzten Zustand einen Reinflüssigkeitsbereich 4, und die Rippen 22, welche in Längsrichtung 5 voneinander beabstandet sind, halten insbesondere die inneren Faltkanten 2B des Filtermediums 2 in Form. Das heißt, bei einer in der Fig. 2 angedeuteten Durchströmrichtung 8 wirken die Rippen 22 bzw. der innere oder erste Stützkörperabschnitt 3A einer Verformung der Faltungen entgegen.

Man erkennt insbesondere in der Fig. 2, dass die äußeren Faltkanten 2A zusammen mit dem zweiten Stützkörperabschnitt 3B eine äußere Mantelfläche des Filterelementes 1 bilden. Die äußere Mantelfläche ist mit 6 bezeichnet und entspricht in der Ausführungsform der Fig. 1 einem Zylindermantel. Beim Betrieb des Filterelementes 1 durchströmt verunreinigtes Fluid in der Orientierung der Fig. 2 von links das Filtermedium 2 und tritt entlang der Strömungsrichtung 8 in den Reinfluidbereich bzw. Reinflüssigkeitsbereich 4 ein. Von dort kann es als gereinigtes Betriebsmittel im Kraftfahrzeug verwendet werden. Beispielsweise kann es sich um Öl oder Kraftstoff handeln.

Das Filterelement 1 eignet sich insbesondere auch als Diesel- oder Benzinfilterelement, aber auch andere Anwendungsszenarien sind möglich. Beispielsweise kann auch Harnstofflösung mit Hilfe des Filterelementes 1 gereinigt werden. Die bei bestimmungsgemäßem Einsatz vorliegende Strömungsrichtung 8 verläuft, wie in der Fig. 2 angedeutet ist, im Wesentlichen von den äußeren Faltkanten 2A hin zu den inneren Faltkanten 2B bzw. in Richtung zu dem inneren Stützkörperabschnitt 3A und weiter zum äußeren Stützkörperabschnitt 3B. Das gefaltete Filtermedium 2 hat Endfalten 2C und 2D, welche in dem Übergangsbereich zwischen dem ersten und dem zweiten Stützkörperabschnitt 3A, 3B befestigt sind. In der Ausführungsform der Fig. 1 ist der zweite, äußere Stützkörperabschnitt 3B, welcher die Mantelfläche des Filterelements 1 zum Teil bildet, fluiddicht ausgeführt.

Ferner ist, wie in der Fig. 1 dargestellt ist, eine (optionale) obere und eine untere Endscheibe 11, 14 vorgesehen, welche jeweils auf die Faltprofile 13 aufgebracht sind. Die Endscheiben 11, 14 können aus einem Kunststoffmaterial bestehen, welches auf die Faltprofile 13 fluiddicht befestigt ist. Dies kann durch Kleben, Verschweißen oder andere Befestigungsmöglichkeiten erfolgen. Die Endscheiben 11, 14 stabilisieren die Faltungen und trennen einen Rohfluidbereich von einem Reinfluidbereich. Die in der Fig. 1 gezeigte obere Endscheibe 11 hat einen Anschlussstutzen 12, welcher mit dem Reinflüssigkeitsraum 4 korrespondiert. Der Anschlussstutzen 12 ist dabei, wie auch der Reinflüssigkeitsraum 4, exzentrisch angeordnet. Eine Längsachse des Filterelementes ist in der Fig. 1 mit 5 bezeichnet.

In der Ausführungsform der Fig. 1 bzw. Fig. 2 sind die Endscheiben 11, 14 mit überstehenden Rändern 15, 16 versehen, so dass die äußeren Faltkanten 2A des Faltenbalgs 2 und der äußere Stützkörperabschnitt 3B umschlossen werden. In dem inneren Stützkörperabschnitt 3A sind ferner Öffnungen 23 vorgesehen, so dass das gereinigte Fluid möglichst unbehindert in den Reinfluidbereich 4 eindringen kann. Bei der dargestellten Ausführungsform des Filterelements 1 strömt das zu reinigende Fluid, wie ein flüssiges Betriebsmittel, eher nicht radial, also in Richtung zur Symmetrieachse, durch das Filtermedium 2, sondern eher quer entlang einer Vorzugsrichtung 8 von dem in der Orientierung der Fig. 2 links vorliegenden Rohfluidbereich in den Reinfluidbereich 4.

Die Fig. 3 zeigt eine Querschnittsansicht einer Ausführungsform einer Filteranordnung mit einem Filterelement, wie es in den Fig. 1 und 2 dargestellt ist. Die Filteranordnung 100 hat dabei eine Filteraufnahme oder ein Filtergehäuse 17 mit einer Eintrittsöffnung 19 und einer Austrittsöffnung 18 für Roh- bzw. Reinfluid. In die Filteraufnahme 17, die mehrteilig ausgeführt sein kann, ist das Filterelement 1 eingesetzt. Der Anschlussstutzen 12 ist dabei in die Auslassöffnung 18 eingesteckt. Durch die Einlassöffnung 19 kann verschmutztes Rohfluid 21 in den Rohfluidbereich 24 eintreten. Der Rohfluidbereich 24 umschließt dabei das Filterelement 1. Die Filterelementaufnahme bzw. das Gehäuse 17 kann dabei ein zylinderförmiges Volumen umschließen. Das zu reinigende Fluid, wie beispielsweise Dieselkraftstoff oder dergleichen, durchströmt in Durchströmungsrichtung 8 das Filtermedium 2 und tritt in den Reinfluidbereich 4 innerhalb des Stützkörpers 3 ein. Von dort gelangt es durch den Anschlussstutzen 12 als gereinigtes Fluid 20 über weitere nicht dargestellte Leitungen zu weiteren Bestandteilen eines Kraftfahrzeugs.

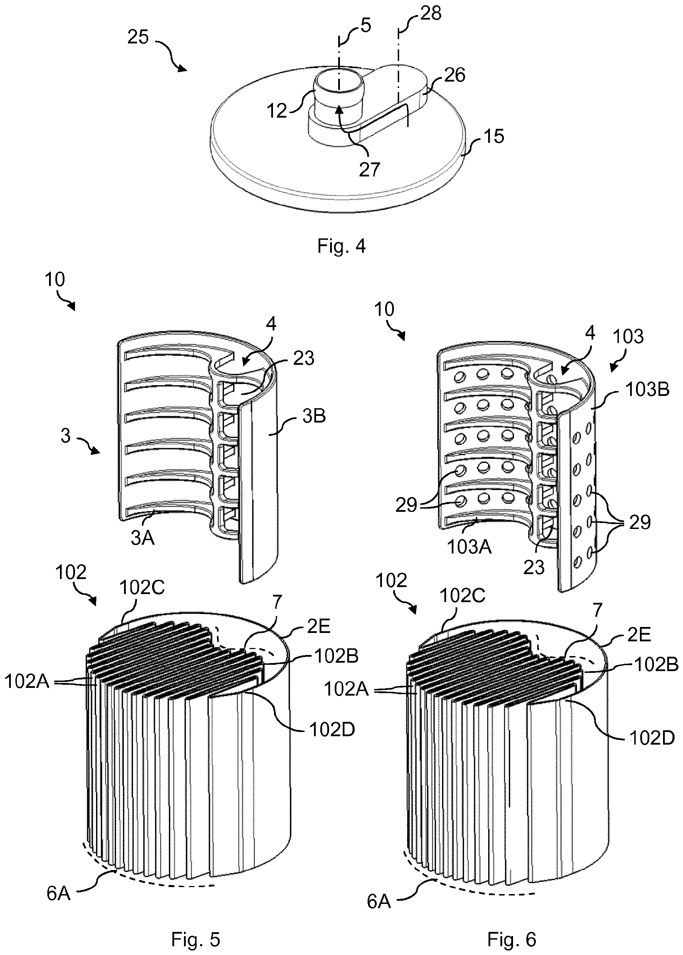

Bei der Ausführungsform, wie sie in der Fig. 3 dargestellt ist, sind der Reinfluidbereich 4 und damit auch der jeweilige Anschlussstutzen 12 bzw. die Auslassöffnung 18 des Gehäuses 17 exzentrisch zur Symmetrie- oder Längsachse 5 angeordnet. Bei bestimmten Einbausituationen ist jedoch eine zentrale Auslassöffnung gewünscht. In der Fig. 4 ist eine perspektivische Ansicht einer anderen Ausführungsform einer Endscheibe für ein Filterelement dargestellt, welches diese Anforderung erfüllt. Die Endscheibe 25 ist ähnlich wie die in der Fig. 1 dargestellte Endscheibe ausgeführt. Allerdings ist ein Umlenkkanal 26 vorgesehen, welcher im Wesentlichen entlang der Reinfluidbereichsachse 28 vorliegendes Reinfluid in Richtung zur Längs- oder Symmetrieachse 5 fließendes Fluid umlenkt. Der geschwungene Pfeil 27 in der Fig. 4 zeigt die Strömung des Reinfluids an, welches radial umgelenkt ist. Dadurch ist es möglich, den Anschlussstutzen 12 zentral an der Endscheibe 25 vorzusehen. Insofern lässt sich ein hinsichtlich der Filterfläche optimiertes Filterelement auch in konventionellen Filteranordnungen einsetzen, die in der Regel auf sternförmige Endlosfaltenbalge zwischen zwei Endscheiben eingerichtet sind und einen zentrischen Anschlussstutzen bedingen.

In den Fig. 5 und 6 sind perspektivische Explosionszeichnungen einer zweiten und einer dritten Ausführungsform eines Filterelementes dargestellt. Bezüglich der Fig. 5 ist ein Filterelement 10 dargestellt, bei dem der Stützkörper 3 im Wesentlichen so ausgeführt ist, wie es bezüglich der ersten Ausführungsform aus den Fig. 1 und 2 erläutert wurde. Das Filtermedium 102 ist als ein modifizierter Endlosfaltenbalg mit variierender Faltenhöhe ausgestaltet: Das Filtermedium 102 hat dabei einen Umlauffaltabschnitt 2E, welcher den äußeren Stützkörperabschnitt 3B umschließt. Man erkennt in der Fig. 5 die äußeren Faltkanten 102A, welche eine Einhüllende 6A bilden.

Innere Faltkanten 102B haben eine Einhüllende 7. Die Einhüllende 7 der inneren Faltkanten 102B umschließt zusammen mit dem Umlauffaltabschnitt 2E den Reinfluidbereich 4, welcher von dem Stützkörper 3 mit begrenzt wird. Anstelle der Endfalten, wie sie in der Fig. 2 als 2C und 2D bezeichnet sind, tritt ein die Faltkanten 102C und 102D verbindender, den Stützkörper 3 umgreifender Umlauffaltabschnitt 2E. Insofern wird die Mantelfläche aus dem besonders langen Umlauffaltabschnitt 2E und der Einhüllenden 6A der äußeren Faltkanten 102A gebildet.

Die Fig. 6 zeigt ein Filterelement 10, welches ähnlich dem in der Fig. 5 dargestellten Filterelement aufgebaut ist. Das Filtermedium 102 entspricht dabei dem Endlos-Faltenbalg, wie er in der Fig. 5 angedeutet ist. Allerdings hat der Stützkörper 103 einen nicht fluiddichten äußeren Stützkörperabschnitt 103B. Der Stützkörperabschnitt 103B hat Öffnungen 29, durch die Fluid in den Reinfluidbereich 4 treten kann. Da die Öffnungen 29 im zusammengebauten Zustand von dem Umlauffaltabschnitt 2E abgedeckt sind, ist hier weitere zusätzliche Filterfläche vorhanden. Der zweite innere Stützkörperabschnitt 103A ist den inneren Faltkanten 102B des Faltenbalgs 102 zugewandt.

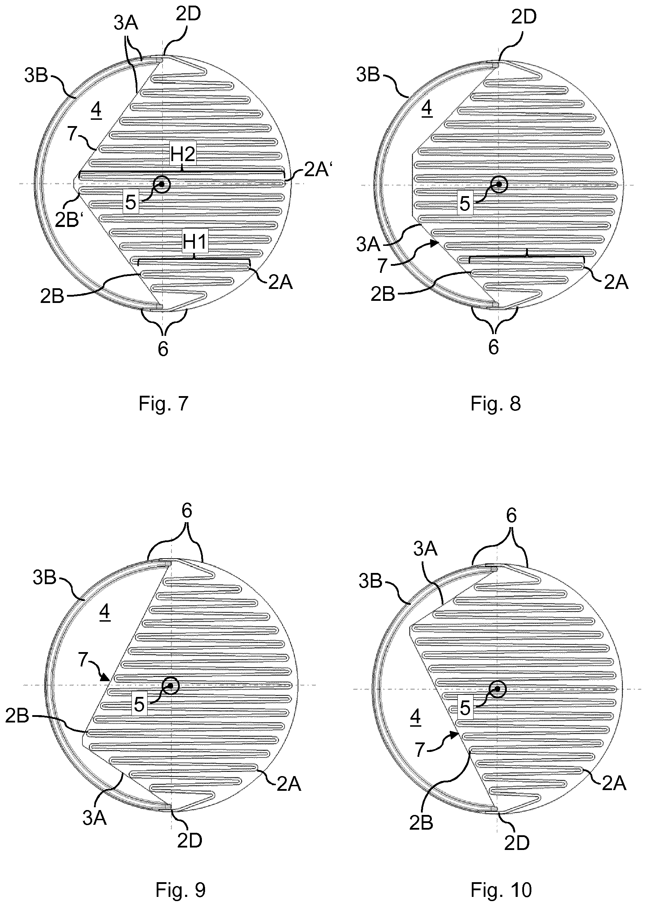

Es können von den Faltgeometrien, wie sie im Wesentlichen in den Fig. 1 bis 6 dargestellt sind, abweichende Faltungsverläufe vorgesehen werden. Entsprechend kann auch die Geometrie des Stützkörpers angepasst werden. In den Fig. 7 bis 10 sind Querschnittsansichten weiterer Ausführungsformen von Filterelementen dargestellt. Dabei sind die Bezugszeichen wie in den Fig. 1 bis 3 für die Mantelfläche 6, äußere Faltkanten 2A, innere Faltkanten 2B, Reinflüssigkeitsbereich 4, innerer Stützkörperabschnitt 3A und äußerer Stützkörperabschnitt 3B verwendet. Während in den Ausführungsformen der Fig. 1 bis 6 die inneren Faltkanten 3A eine zumindest teilweise konvexe Einhüllende haben, sind in den Fig. 7 bis 10 konkave Einhüllende 7 angedeutet.

Am Beispiel der Fig. 7 ist angedeutet, wie sich die Faltenhöhe im Verlauf des Faltenbalges verändert. Es sind zwei benachbarte Faltkanten 2A, 2B explizit bezeichnet. Der Abstand zwischen der äußeren Faltkante 2A und der inneren Faltkante 2B bezeichnet im Wesentlichen die Faltenhöhe H1. Im Verlauf des Faltenbalgs sind weitere benachbarte Faltkanten 2A' und 2B' angedeutet. Die sich ergebende Faltenhöhe H2 ist dabei deutlich größer als die Faltenhöhe H1. Das Filterelement umfasst somit ein gefaltetes Filtermedium mit variabler Faltenhöhe.

Die Fig. 8, 9 und 10 zeigen weitere geometrische Ausgestaltungen der Faltenhöhen und Reinfluidbereiche 4. Obgleich im Wesentlichen kreisförmige Querschnittsflächen dargestellt sind, sind auch andere Zylinderformen denkbar.

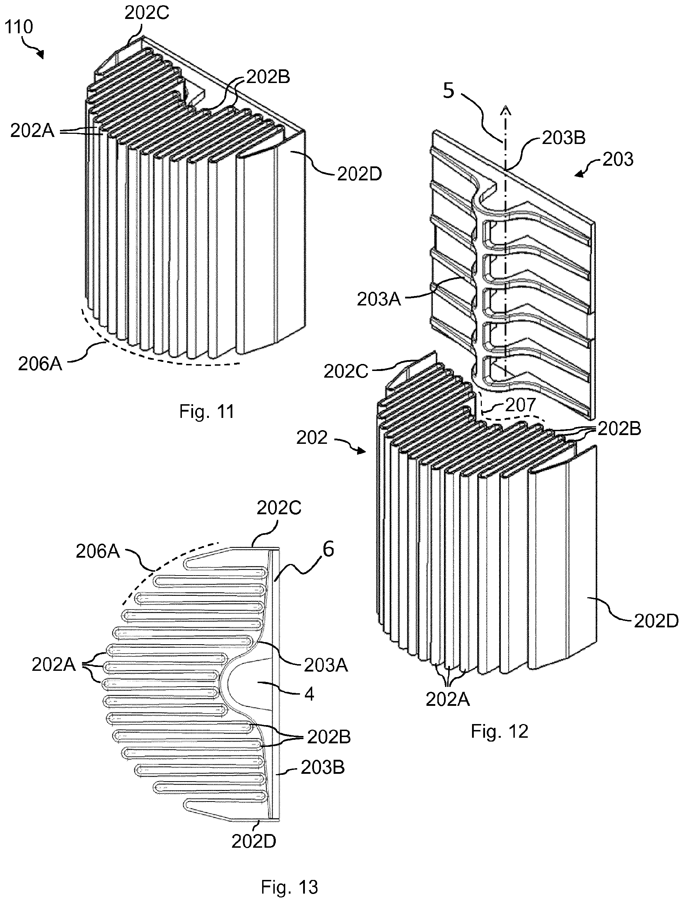

In den Fig. 11 bis 13 ist eine achte Ausführungsform eines Filterelementes dargestellt. Das Filterelement 110 hat dabei, wie man in der Fig. 13 in der Querschnittsansicht sieht, eine halbkreisförmige Grundfläche. Man erkennt wiederum ein zickzackförmig gefaltetes Filtermedium 202 mit variabler Faltenhöhe. Dabei ergeben sich äußere Faltkanten 202A und innere Faltkanten 202B. Die jeweiligen Endfalten 202C und 202D sind an dem Stützkörper 203 befestigt. Der Stützkörper 203 hat dabei einen plattenförmigen rechteckigen äußeren Stützkörperabschnitt 203B. Von dem Stützkörperabschnitt 203B, der als Kunststoffplatte ausgeführt sein kann, ragen einen inneren Stützkörperabschnitt 203A bildende Rippen oder Stützelemente hin zu den inneren Faltkanten 202B.

Das Filterelement 110 hat daher eine Mantelfläche, die aus einem rechteckigen Abschnitt 203B besteht, und einen halbkreisförmigen Abschnitt, welcher aus der Einhüllenden 206A der äußeren Faltkanten 202A gebildet ist. Man erkennt ferner den Reinfluidbereich 4, der von der Platte 203B und der Einhüllenden bzw. den inneren Faltkanten 202b umschlossen ist. Zwei gleiche Filterelemente 110 können zu einem kreiszylinderförmigen Element zusammengesetzt werden.

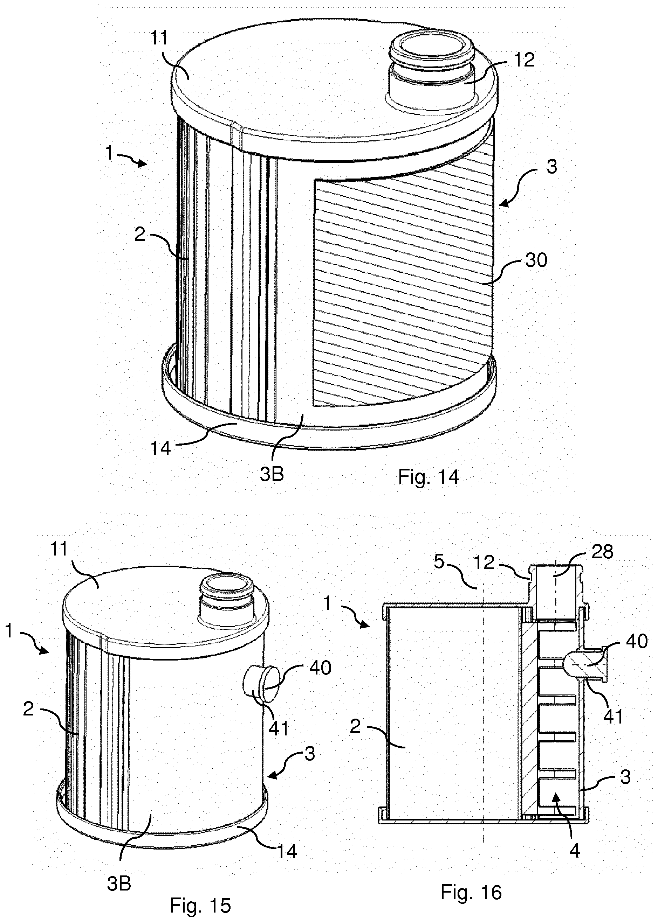

In Fig. 14 ist eine vorteilhafte Ausgestaltung eines Filterelements 1 mit einer integrierten Heizvorrichtung 30 dargestellt. Die Heizvorrichtung 30 ist hierbei als Folienverbund ausgebildet und auf den zweiten Stützkörperabschnitt 3B des Stützkörpers 3 aufgebracht. In einer alternativen nicht dargestellten Ausführungsform ist die Heizvorrichtung in das Material des Stützkörpers 3 eingebettet, beispielsweise von Kunststoff umspritzt.

In Fig. 15 und Fig. 16 ist eine vorteilhafte Ausgestaltung eines Filterelements 1 mit einem Sensor 40 dargestellt. Der Stützkörper 3 weist eine Schnittstelle 41, beispielsweise in Form eines Gewindestutzens, auf, über welche der Sensor 40 mit dem Stützkörper 3 verbindbar ist. Über die Schnittstelle 41 ist der Sensor 40 derart von außen in den zweiten Stützkörperabschnitt 3B einsteckbar bzw. einbringbar, dass der installierte Sensor 40 in den Reinfluidbereich 4 hinter dem zweiten Stützkörperabschnitt 3B einragt. Es ist auch denkbar, mehrere Schnittstellen 41 in den Stützkörper 3 einzubringen, sodass mehrere Sensoren 40, insbesondere für unterschiedliche Prozessgrößen, mit dem Stützkörper 3 verbindbar sind.

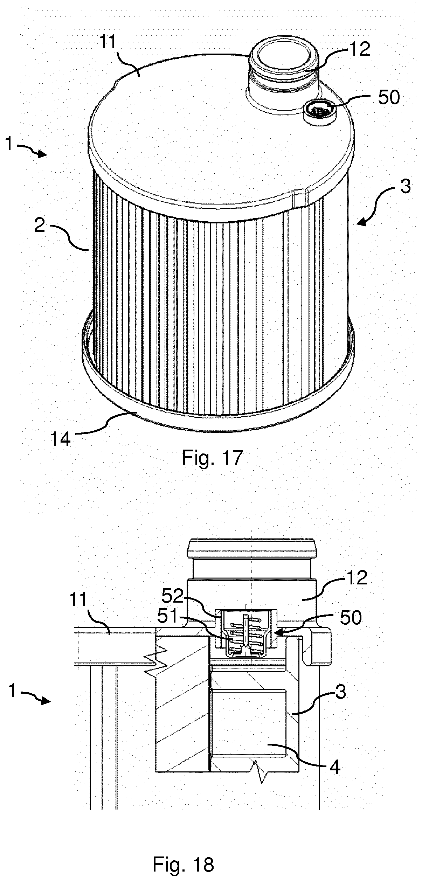

In Fig.17 ist ein Filterelement 1 dargestellt, welches zusätzlich mit einem Umgehungsventil 50 ausgestattet ist. Das Umgehungsventil 50 ist in die obere Endscheibe 11 des Filterelements 1 integriert und exzentrisch zu der Längsachse 5 des Filterelements 1 und benachbart zu dem Anschlussstutzen 12 über dem Stützkörper 3 angeordnet.

In Fig.18 ist ein Ausschnitt aus Fig.17 im Detail dargestellt. Die Endscheibe 11 bildet den Ventilsitz des Umgehungsventils 50. Das Umgehungsventil 50 verfügt über eine Ventilfeder 51 und einen Ventilkegel 52. Andere Ausführungsformen des Umgehungsventils 50 sind jedoch ebenso möglich.

Obwohl die vorliegende Erfindung anhand verschiedener Ausführungsbeispiele beschrieben wurde, ist sie darauf nicht beschränkt, sondern auf vielfältige Weise modifizierbar. Die dargestellten Geometrien können verändert werden. Neben den angedeuteten Anwendungen der Flüssigfiltration können auch gasförmige Fluide gefiltert werden. Insofern ist es auch möglich, das Filterelement als Luftfilterelement zu gestalten.

### Verwendete Bezugszeichen:

- 1: Filterelement
- 2: Filtermedium
- 2A, 2B: Faltkante
- 2C, 2D: Endfalte
- 2E: Umlauffaltabschnitt
- 3: Stützkörper
- 3A, 3B: Stützkörperabschnitt
- 4: Reinflüssigkeitsbereich
- 5: Längsachse
- 6: Mantelfläche
- 6A: Einhüllende der inneren Faltkanten
- 7: Einhüllende der äußeren Faltkanten
- 8: Durchströmrichtung
- 9: Stützelement
- 10: Filterelement
- 11: Endscheibe
- 12: Anschlussstutzen
- 13: Faltprofil
- 14: Endscheibe
- 15, 16: Rand
- 17: Filteraufnahme
- 18: Auslassöffnung
- 19: Einlassöffnung
- 20: Reinfluid
- 21: Rohfluid
- 22: Rippen
- 23: Öffnungen
- 24: Rohfluidbereich
- 25: Endscheibe
- 26: Umlenkkanal
- 27: Umlenkströmung
- 28: Reinfluidbereichsachse
- 29: Öffnungen
- 30: Heizvorrichtung
- 40: Sensor
- 41: Schnittstelle
- 50: Umgehungsventil
- 51: Ventilfeder
- 52: Ventilkegel
- 102: Filtermedium
- 102A, 102B: Faltkante
- 102C, 102D: Endfalte
- 103: Stützkörper
- 103A, 103B: Stützkörperabschnitt
- 100: Filteraufnahme
- 110: Filterelement
- 202: Filtermedium
- 202A, 202B: Faltkante
- 202C, 202D: Endfalte
- 203: Stützkörper
- 203A, 203B: Stützkörperabschnitt
- 206A, 207: Einhüllende
- H1, H2: Faltenhöhe

## Patentansprüche

1. Filterelement (1) zum Filtern von Flüssigkeiten, insbesondere von Betriebsmitteln für ein Kraftfahrzeug, mit einem gefalteten Filtermedium (2), welches äußere Faltkanten (2A) und innere Faltkanten (2B) umfasst, wobei die Faltkanten (2A, 2B) entlang einer Längsachse (5) des Filterelements (1) verlaufen, und mit einem Stützkörper (3), welcher einen ersten Stützkörperabschnitt (3A) und einen zweiten Stützkörperabschnitt (3B) umfasst, wobei der erste Stützkörperabschnitt (3A) den inneren Faltkanten (2B) zugewandt ist und sich an eine Einhüllende (7) der inneren Faltkanten (2B) schmiegt, wobei eine Einhüllende (6A) der äußeren Faltkanten (2A) und der zweite Stützkörperabschnitt (3B) die äußere Mantelfläche (6) bilden, die als Zylindermantel, insbesondere Kreiszylindermantel, ausgebildet ist, und wobei die inneren Faltkanten (2B) und der erste Stützkörperabschnitt (3A) wenigstens teilweise einen Reinflüssigkeitsbereich (4) bilden, der exzentrisch zu einem Schwerpunkt der Querschnittsfläche des Zylindermantels (6) angeordnet ist, wobei das Filterelement (10) ausschließlich einen, von dem gefalteten Filtermedium (2) gebildeten, zusammenhängenden Faltenbalg umfasst.

2. Filterelement (1) nach Anspruch 1, wobei die jeweils zwischen einer inneren Faltkante (2B) und einer äußeren Faltkante (2A) verlaufenden Faltenabschnitte parallel oder zumindest im Wesentlichen parallel zueinander verlaufen.

3. Filterelement (10) nach Anspruch 1 oder 2, wobei das gefaltete Filtermedium (2) in der Art eines Endlosfaltenbalgs ausgeführt ist und einen Umlauffaltabschnitt (2E) umfasst, welcher mit den inneren Faltkanten (2B) den Stützkörper (3) umläuft.

4. Filterelement (1) nach einem der Ansprüche 1 - 3, wobei der Reinflüssigkeitsbereich (4) wenigstens teilweise innerhalb einer Einhüllenden (7) der inneren Faltkanten (2B) liegt.

5. Filterelement (1) nach einem der Ansprüche 1 - 4, wobei bei bestimmungsgemäßem Einsatz eine Durchströmrichtung (8) von zu filternder Flüssigkeit von den äußeren Faltkanten (2A) zu dem zweiten Stützkörperabschnitt (3B) verläuft.

6. Filterelement (1) nach einem der Ansprüche 1 - 5, wobei zwischen den äußeren und den inneren Faltkanten (2A, 2B) Faltenabschnitte mit variabler Faltenhöhe gebildet sind.

7. Filterelement (1) nach einem der Ansprüche 1 - 6, wobei der erste Stützkörperabschnitt (3A) durch sich von dem zweiten Stützkörperabschnitt (3B) erstreckende Stützelemente (9) gebildet ist.

8. Filterelement (1) nach einem der Ansprüche 1 - 7, wobei der zweite Stützkörperabschnitt (3B) flüssigkeitsdicht ist oder Flüssigkeitsdurchlässe umfasst.

9. Filterelement (1) nach einem der Ansprüche 1 - 8, wobei Endfalten (2C, 2D) des gefalteten Filtermediums (2) in einem Bereich zwischen dem ersten und dem zweiten Stützkörperabschnitt (3A, 3B) an dem Stützkörper (3) befestigt sind.

10. Filterelement (1) nach einem der Ansprüche 1 - 9, ferner mit mindestens einer an Faltprofilen (13) befestigten Endscheibe (11) mit einem Anschlussstutzen (12), welcher kommunikativ mit dem Reinflüssigkeitsbereich (4) gekoppelt ist.

11. Filterelement (1) nach einem der Ansprüche 1 - 10, wobei eine obere Stirnseite des Filterelements (1), insbesondere eine an oberen Faltprofilen (13) befestigte obere Endscheibe (11) oder eine obere Stirnseite des Stützkörpers (3), Träger eines Umgehungsventils (50) ist.

12. Filterelement (1) nach einem der Ansprüche 1 - 11, wobei der Stützkörper (3) eine Heizvorrichtung (30) aufweist.

13. Filterelement (1) nach einem der Ansprüche 1 - 12, wobei der Stützkörper (3) mindestens einen Sensor (40) oder mindestens eine Schnittstelle (41) für einen Sensor (40) aufweist.

14. Filteranordnung (100) mit einer Filteraufnahme (17) und einem in der Filteraufnahme (17) aufgenommenem Filterelement (1) nach einem der Ansprüche 1 - 13.

## Claims

1. Filter element (1) for filtering liquids, in particular operating means for a motor vehicle, having a folded filter medium (2) which comprises outer fold edges (2A) and inner fold edges (2B), wherein the fold edges (2A, 2B) extend along a longitudinal axis (5) of the filter element (1), and having a support body (3) which comprises a first support body portion (3A) and a second support body portion (3B), wherein the first support body portion (3A) faces the inner fold edges (2B) and nestles against an envelope (7) of the inner fold edges (2B), wherein an envelope (6A) of the outer fold edges (2A) and the second support body portion (3B) form the outer cylindrical surface (6) which is designed as cylinder jacket, in particular circular cylinder jacket, and wherein the inner fold edges (2B) and the first support body portion (3A) at least partially form a clean fluid area (4) which is arranged eccentrically in relation to a center of gravity of the cross-sectional area of the cylinder jacket (6), wherein the filter element (10) comprises exclusively a continuous bellows formed by the folded filter medium (2).

2. Filter element (1) according to claim 1, wherein the folding sections each extending between an inner fold edge (2B) and an outer fold edge (2A) extend parallel or at least substantially parallel to each other.

3. Filter element (10) according to claim 1 or 2, wherein the folded filter medium (2) is designed as an endless bellows and comprises a circumferential folding portion (2E) which passes around the support body (3) with the inner fold edges (2B).

4. Filter element (1) according to one of the claims 1 to 3, wherein the clean fluid area (4) lies at least partially in an envelope (7) of the inner fold edges (2B).

5. Filter element (1) according to one of the claims 1 to 4, wherein, when used as intended, a flow direction (8) of liquid to be filtered extends from the outer fold edges (2A) to the second support body section (3B).

6. Filter element (1) according to one of the claims 1 to 5, wherein folding sections with variable fold height are formed between the outer and inner fold edges (2A, 2B).

7. Filter element (1) according to one of the claims 1 to 6, wherein the first support body portion (3A) is formed by support members (9) extending from the second support body portion (3B).

8. Filter element (1) according to one of the claims 1 to 7, wherein the second support body portion (3B) is liquid-tight or comprises liquid passages.

9. Filter element (1) according to one of the claims 1 to 8, wherein end folds (2C, 2D) of the folded filter medium (2) are attached to the support body (3) in an area between the first and second support body portion (3A, 3B).

10. Filter element (1) according to one of the claims 1 to 9, furthermore having at least one end disk (11) fastened to folding profiles (13) with a union (12) which is communicatively coupled to the clean fluid area (4).

11. Filter element (1) according to one of the claims 1 to 10, wherein an upper end face of the filter element (1), in particular an upper end disk (11) fastened to upper folding profiles (13) or an upper end face of the support body (3), is carrier of a bypass valve (50).

12. Filter element (1) according to one of the claims 1 to 11, wherein the support body (3) features a heating device (30).

13. Filter element (1) according to one of the claims 1 to 12, wherein the support body (3) features at least one detector (40) or at least one interface (41) for a detector (40).

14. Filter arrangement (100) having a filter seat (17) and a filter element (1) accommodated in the filter seat (17) in accordance with one of the claims 1 to 13.

## Revendications

1. Élément filtrant (1) destiné au filtrage de liquides, notamment de moyens opérationnels pour un véhicule automobile, ayant un milieu filtrant plié (2) qui comprend des arêtes de pliage extérieures (2A) et des arêtes de pliage intérieures (2B), dans lequel les arêtes de pliage (2A, 2B) longent un axe longitudinal (5) de l'élément filtrant (1), et avec un corps de support (3), qui comprend une première section de corps de support (3A) et une seconde section de corps de support (3B), dans lequel la première section de corps de support (3A) fait face aux arêtes de pliage intérieures (2B) et s'emboîte contre une enveloppante (7) des arêtes de pliage intérieures (2B), dans lequel une enveloppante (6A) des arêtes de pliage extérieures (2A) et la seconde section de corps de support (3B) forment la surface externe (6) qui est réalisée en tant qu'enveloppe cylindrique, notamment enveloppe cylindrique circulaire, et dans lequel les arêtes de pliage intérieures (2B) et la première section de corps de support (3A) forment au moins partiellement une zone de liquide pur (4) qui est disposée de manière excentrique par rapport à un centre de gravité de la surface de la section transversale de l'enveloppe cylindrique (6), dans lequel l'élément filtrant (10) comprend exclusivement un soufflet continu formé par le milieu filtrant plié (2).

2. Élément filtrant (1) selon la revendication 1, dans lequel les sections de plis s'étendant chacune entre une arête de pliage intérieure (2B) et une arête de pliage extérieure (2A) évoluent de manière parallèles ou au moins sensiblement parallèles l'une à l'autre.

3. Élément filtrant (10) selon la revendication 1 ou 2, dans lequel le milieu filtrant plié (2) est réalisé sous la forme d'un soufflet continu et comprend une section de pliage circonférentielle (2E) qui s'étend autour du corps de support (3) avec les arêtes de pliage intérieures (2B).

4. Élément filtrant (1) selon l'une des revendications 1 à 3, dans lequel la zone de liquide pure (4) se trouve au moins partiellement dans une enveloppante (7) des arêtes de pliage intérieures (2B).

5. Élément filtrant (1) selon l'une des revendications 1 à 4, dans lequel, lorsqu'il est utilisé conformément à l'usage, un sens d'écoulement (8) du liquide à filtrer s'étend des arêtes de pliage extérieurs (2A) vers la seconde section de corps de support (3B).

6. Élément filtrant (1) selon l'une des revendications 1 à 5, dans lequel des sections de pliage à hauteur de pliage variable sont formées entre les bords de pliage extérieurs et intérieurs (2A, 2B).

7. Élément filtrant (1) selon l'une des revendications 1 à 6, dans lequel la première section de corps de support (3A) est formée par des éléments de support (9) s'étendant depuis la seconde section de corps de support (3B).

8. Élément filtrant (1) selon l'une des revendications 1 à 7, dans lequel la seconde partie de corps de support (3B) est étanche aux liquides ou comporte des passages de liquide.

9. Élément filtrant (1) selon l'une des revendications 1 à 8, dans lequel des plis d'extrémité (2C, 2D) du milieu filtrant plié (2) sont fixés au corps de support (3) dans une zone située entre la première et la seconde section de corps de support (3A, 3B).

10. Élément filtrant (1) selon l'une des revendications 1 à 9, comportant en outre au moins une plaque d'extrémité (11) fixée sur des profils de plis (13) avec une tubulure de raccord (12) couplée de manière communicante à la zone de liquide pur (4).

11. Élément filtrant (1) selon l'une des revendications 1 à 10, dans lequel une face frontale supérieure de l'élément filtrant (1), en particulier un disque d'extrémité supérieure (11) fixé à des profils de plis supérieurs (13) ou une face d'extrémité supérieure du corps de support (3), sert de support d'une soupape de dérivation (50).

12. Élément filtrant (1) selon l'une des revendications 1 à 11, dans lequel le corps de support (3) présente un dispositif de chauffage (30).

13. Élément filtrant (1) selon l'une des revendications 1 à 12, dans lequel le corps de support (3) présente au moins un capteur (40) ou au moins une interface (41) pour un capteur (40).

14. Agencement de filtre (100) comportant un logement de filtre (17) et un élément filtrant (1) intégré dans le logement de filtre (17) selon l'une des revendications 1 à 13.
